# FASCICULE DE BREVET EUROPEEN

(11) **EP 1 040 019 B1**
(45) Date de publication et mention de la délivrance du brevet: **12.12.2001**
(21) Numéro de dépôt: 98964500.7
(22) Date de dépôt: 11.12.1998
(51) Int. Cl.: B60C 17/02

(54) **ENSEMLE ROULANT AVEC MEMBRANE DE SOUTIEN POUR PNEUMATIQUES**
RADEINHEIT MIT SICHERHEITSMEMBRAN FÜR REIFEN
WHEEL ASSEMBLY WITH SUPPORT MEMBRANE FOR TIRES

(30) Priorité: 19.12.1997 FR 9716450
(43) Date de publication de la demande: 04.10.2000
(73) Titulaire: COMPAGNIE GENERALE DES ETABLISSEMENTS MICHELIN-MICHELIN & CIE, 63040 Clermont-Ferrand Cédex (FR)
(72) Inventeur: CLOUET, Alain, F-63270 Saint-Maurice (FR); RIVATON, Renaud, F-63112 Blanzat (FR)
(74) Mandataire: Devaux, Edmond-Yves
(86) Numéro de dépôt international: EP9808102
(87) Numéro de publication internationale: WO9932308

(56) Documents cités:
- FR-A- 2 135 333
- FR-A- 2 370 599
- FR-A- 2 756 221
- US-A- 3 885 614

## Description

L'invention concerne ensemble roulant avec un moyen de support de bande de roulement d'un pneumatique. Ledit moyen de support constitue avec ledit pneumatique et sa jante de montage l'ensemble roulant pour véhicule, destiné à pouvoir rouler après une perte de pression conséquente et inattendue du pneumatique, ledit pneumatique étant plus particulièrement un pneumatique sans chambre de type Poids-Lourds dont le rapport de forme est au plus égal à 0,8.

Le brevet FR 2 135 333 décrit un ensemble roulant pour véhicules, formé par une membrane torique en caoutchouc renforcé, utilisée comme moyen de soutien de bande de roulement d'un pneumatique, par ledit pneumatique et par sa jante de montage dont le diamètre nominal est D_{S} et dont le rebord a un diamètre extérieur D_{R}, ledit ensemble roulant pouvant rouler lorsque le pneumatique est sujet à une perte de pression, la dite membrane étant gonflée à une pression p0 supérieure à la pression p1 de la cavité du pneumatique, et ayant, à l'état gonflé, un rayon de sommet inférieur au rayon écrasé du pneumatique utilisé à sa pression recommandée, ladite membrane étant en son sommet renforcée par une nappe (surcouche), ledit sommet de ladite membrane comprenant une armature de frettage, orientée circonférentiellement et présentant une force de rupture par cm de nappe permettant de résister à la tension due à la force centrifuge maximale à laquelle est soumis le pneumatique, augmentée de la tension due au différentiel de pression p₀ - p₁ existant en roulage normal; mais de rompre pour un différentiel de pression supérieur p₀ - p'₁, existant en cas de perte de pression subie par le pneumatique, et, vue en section méridienne, chaque partie basse de la membrane comprend un élément annulaire de renforcement (bord renforcé), dont le diamètre intérieur est compris entre une valeur égale à D_{R} et une valeur égale à D_{S}, son profil méridien à l'état gonflé permette à la paroi externe de la membrane de ne pas être en contact avec la paroi interne du pneumatique hors d'une zone de hauteur radiale comprise entre le diamètre D_{S} et un diamètre D_{S} - 2(D_{R} - D_{S}). Lesdits moyens de restriction selon FR-2 135 333 sont constitués en une matière flexible, pliée et assujettie de manière à établir une bande de maintien, alors que les moyens pour libérer les moyens de restriction peuvent comprendre soit une couture, soit une liaison adhésive, soit un élément de fixation en étoffe.

Le brevet français FR 2 756 221 publiée le 29.05.1998 (correspondent au EP-A-0 946 375), décrit et revendique, en tant que moyen de support ou de soutien de bande de roulement, une membrane torique en caoutchouc renforcé, gonflée à une pression p₀ supérieure à la pression p₁ de la cavité du pneumatique, et ayant, à l'état gonflé, un rayon de sommet R_{M} inférieur au rayon écrasé du pneumatique utilisé à sa pression recommandée, ladite membrane étant au moins en son sommet renforcée par une armature de sommet formée d'au moins une nappe de fils ou câbles, ledit sommet de ladite membrane comprenant en outre une armature de frettage composée d'au moins une nappe de fils ou câbles orientés circonférentiellement et présentant une force de rupture par cm de nappé au moins égale au produit du rayon de sommet R_{M} par la pression, par cm² de surface de ladite nappe, conduisant à une tension par cm de nappe équivalente à la tension due à la force centrifuge maximale à laquelle peut être soumis le pneumatique et permettant la rupture des fils ou câbles de frettage pour un différentiel de pression p₀ - p'₁ existant en cas de perte de pression subie par le pneumatique, supérieur au différentiel de pression initial p₀ - p₁, c'est-à-dire en roulage normal.

La membrane torique peut être fermée ou ouverte. Elle est dite fermée lorsque sa section transversale présente un contour continu, c'est à dire ressemblant à une section de chambre à air gonflée ; elle est dite ouverte si le contour de sa section transversale est discontinu, par exemple lorsque les flancs de ladite membrane ont des extrémités se situant au niveau des bourrelets du pneumatique dans lequel est insérée ladite membrane, et leur étant solidaires ou étant indépendants.

La pression intérieure p₀ de ladite membrane, mesurée à froid, c'est-à-dire à 20 °C, est supérieure à la pression p₁ de la cavité interne du pneumatique d'une quantité comprise entre 0,5.10⁵ Pa et 5,0.10⁵ Pa, selon les dimensions de pneumatique concernées. Etant donné que le rayon sommet R_{M} de la membrane torique est préférentiellement compris entre 0,80 et 0,97 fois le rayon écrasé R_{E} du pneumatique, principalement pour des raisons d'échauffement dudit pneumatique, une différence de pression trop forte risque d'altérer un certain nombre de propriétés du pneumatique lui-même, par exemple l'endurance de l'armature de carcasse dudit pneumatique, tout en exigeant une armature de frettage trop importante.

L'armature de sommet est préférentiellement fonnée de deux nappes de fils ou câbles parallèles entre eux dans chaque nappe et croisés d'une nappe à la suivante en faisant avec la direction circonférentielle un angle compris entre 50° et 85°. Les câbles ou fils sont avantageusement textiles pour des raisons de légèreté, de souplesse et de bonne tenue à la corrosion, et préférentiellement en polyamide aromatique. Les extrémités axiales des deux nappes sont préférentiellement situées sur les flancs de la membrane, de sorte que, si l'on appelle S la largeur axiale maximale de l'armature de carcasse du pneumatique, la largeur des nappes est préférentiellement comprise entre S et 1,30 S.

La membrane torique, conforme à l'invention décrite dans le brevet français ci-dessus, peut éventuellement comporter des flancs renforcés chacun par au moins une nappe de fils ou câbles radiaux, lesdits flancs pouvant être pounrues avantageusement de rainures radiales débouchant sur la jante métallique de montage du pneumatique.

Dans les conditions normales de roulage de l'ensemble formé par le pneumatique, sa jante de montage et la membrane, conditions de charge, de pression, et de vitesse recommandées pour le pneumatique concerné, la membrane conserve un rayon équatorial pratiquement constant et inférieur au rayon écrasé du pneumatique, et les parois extérieures de ses flanes sont dans leur très grande partie en contact permanent avec les parois intérieures du pneumatique. Le frottement existant entre lesdites parois engendre une dégradation et une usure prématurées de la couche de gomme imperméable qui recouvre la paroi intérieure du pneumatique.

Afin de remédier à ces inconvénients, l'invention propose une architecture originale de la membrane torique de soutien, permettant de maîtriser son profil méridien dans les conditions de roulage normales, tout en permettant sa pleine expansion dans le cas d'une perte de pression de la cavité du pneumatique.

Ce but est atteint grâce aux caractéristiques définies dans la revendication 1.

La membrane torique en caoutchouc renforcé, conforme à l'invention, utilisée comme moyen de soutien de bande de roulement d'un pneumatique, et formant avec ledit pneumatique et sa jante de montage, dont le diamètre nominal est D_{S} et dont le rebord a un diamètre extérieur D_{R}, ledit ensemble roulant pouvant rouler lorsque le pneumatique est sujet à une perte de pression, ladite membrane M étant gonflée à une pression p0 supérieure à la pression p₁ de la cavité du pneumatique, et ayant, à l'état gonflé, un rayon de sommet R_{M} inférieur au rayon écrasé du pneumatique utilisé à sa pression recommandée, ladite membrane étant en son sommet renforcée par au moins deux nappes de fils ou câbles parallèles entre eux dans chaque nappe et croisés d'une nappe à la suivante, ledit sommet de ladite membrane comprenant en outre une armature de frettage composée d'au moins une couche de fils ou câbles, orientés circonférentiellement et présentant une force de rupture par cm de nappe pèrmettant de résister à la tension due à la force centrifuge maximale à laquelle est soumis le pneumatique, augmentée de la tension due au différentiel de pression p₀-p₁ existant en roulage normal, mais de rompre pour un différentiel de pression p₀ - p'₁ supérieur, avant chacun de ses flancs renforcé par au moins une desdites deux nappes, vue en section méridienne, la nappe de renforcement de flanc est enroulée dans chaque partie basse de flanc autour d'un élément annulaire de renforcement. dont le diamètre intérieur est compris entre une valeur égale à D_{R} et une valeur égale à D_{S} et dont les constitution et dimensionnement transversal permettent sa rupture après celle de l'armature de frettage, et pour un différentiel de pression p₀ - p'₁, existant en cas de perte de pression subie par le pneumatique. supérieur au différentiel de pression initial p₀ - p₁, ladite nappe de renforcement n'étant pas solidaire dudit élément annulaire de renforcement, et ayant dans chacun des flancs une longueur méridienne telle que son profil méridien à l'état gonflé permette à la paroi externe de membrane de ne pas être en contact avec la paroi interne du pneumatique hors d'une zone de hauteur radiale comprise entre le diamètre D_{S} et un diamètre D_{S} + 2(D_{R} - D_{S})

De manière avantageuse, la force de rupture de l'élément de renforcement, autour duquel est enroulée la nappe de renforcement de flanc, est comprise entre 1,2 et 4 fois la force de rupture par cm de l'armature de frettage utilisée dans la membrane de soutien.

La nappe de renforcement de flanc peut être radiale, ou formée de fils ou câbles faisant avec la direction circonférentielle un angle, pouvant par exemple être compris entre 50° et 90°. De préférence et pour des raisons de fabrication, l'armature de sommet de la membrane et ses nappes de renforcement de flancs seront constituées par les mêmes nappes de fils ou câbles obliques : une première nappe dont l'une des extrémités est située dans la région de l'une des épaules de la membrane et dont l'autre extrémité est l'extrémité de son retournement autour de l'élément de renforcement situé du côté opposé à ladite épaule ; une deuxième nappe dont l'une des extrémités est située dans la région de l'autre épaule de la membrane et dont l'autre extrémité est l'autre extrémité de retournement. Chaque nappe individuelle peut aussi être formée de fils ou câbles radiaux dans la partie des flancs et obliques dans la partie sommet de la membrane.

L'élément annulaire de renforcement peut avantageusement être un seul câble de polyamide aromatique formé de quelques torons. Il peut aussi être constitué par l'enroulement d'un filament de polyamide aromatique sur lui même de façon à former un tronçon de nappe quasi-perpendiculaire à l'axe de rotation de l'ensemble.

La bande de support peut avoir des éléments en relief qui sont sensiblement tronconiques et qui forment des rangées circonférentielles de blocs ou plots, l'armature de frettage de la membrane étant préférentiellement située sur la face radialement extérieure de la bande de support et se présentant sous forme de plusieurs bandelettes de plusieurs câbles circonférentiels textiles de largeurs sensiblement égales aux largeurs des évidements ou rainures entre rangées d'éléments en relief de la bande de support et disposées dans lesdites rainures, de manière indépendante de la bande de support. Cette structure de frettage permet, lorsque la cavité intérieure du pneumatique est dépourvue de gaz de gonflage et par rupture des câbles circonférentiels des bandelettes due au différentiel de pression nettement accru, une expansion plus rapide et plus complète de la membrane torique.

Les caractéristiques et avantages de l'invention seront mieux comprises à l'aide de la description qui suit et qui se réfère au dessin illustrant à titre non limitatif un exemple d'exécution, dessin sur lequel :
- la figure 1 représente schématiquement un ensemble roulant avec une membrane torique de soutien conforme à l'invention, la membrane en position dans le pneumatique monté sur sa jante de service,
- la figure 2 représente schématiquement et en agrandi la membrane de la figure 1.

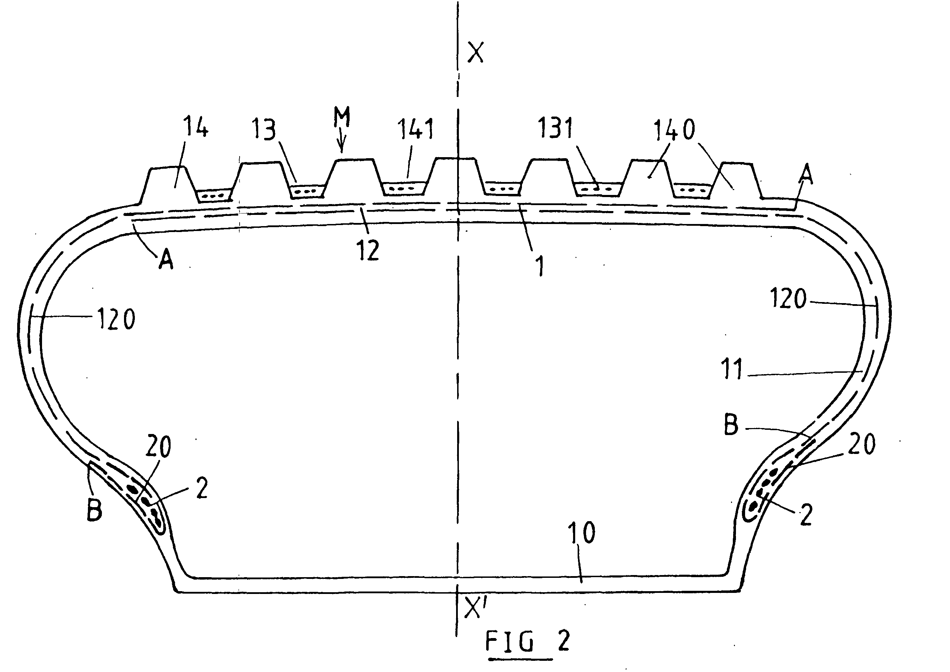

La membrane torique M, conforme à l'invention, est, dans l'exemple décrit. (figure 2), fermée et renforcée en son sommet (1). D'épaisseur constante et faible sur sa partie radialement intérieure (10), elle est plus épaisse sur ses flancs (11) et au sommet (1). Elle est renforcée par deux nappes (120). chaque nappe étant constituée de câbles en polyester, parallèles entre eux dans la nappe avec un pas correspondant à 102 câbles par dm, et faisant avec la ligne équatoriale XX' de l'ensemble un angle égal à 60°, angle qui sera d'un sens pour l'une des nappes et de sens opposé pour l'autre nappe. La largeur de chacune des deux nappes (120) est telle qu'une de ses extrémités A est située dans la région de l'une des épaules de la membrane M. alors que l'autre extrémité B de ladite nappe (120) est l'extrémité du retournement (20) qu'elle forme après enroulement autour de l'élément de renforcement annulaire (2) dans la partie basse du pneumatique située du côté opposé à ladite épaule Les deux nappes (120) forment ainsi dans la région du sommet de la membrane M une armature de sommet (12) composee de de deux couches de câbles parallèles entre eux dans chaque portion de nappe et croisés d'une couche à la suivante en faisant avec la direction équatoriale un angle de 60°.

L'armature de sommet (12) ainsi formée, facilement expansible, est surmontée d'une bande de support caoutchouteuse (14) munie d'éléments en relief tronconiques (140) séparés entre eux par des évidements (141). Ces "plots" tronconiques forment sur la surface de la bande (14) des rangées circonférentielles, de sorte que, entre deux rangées de plots (140) axialement adjacentes, est disposée une bandelette de frettage (131) de câbles circonférentiels. lesdits câbles étant en polyamide aromatique, formés de trois fils de 330 TEX. Ladite bandelette de câbles présente une courbe force de traction par cm de nappe (perpendiculairement à la direction des câbles) en fonction de l'allongement relatif F cm = f(ε) ayant une pente relativement élevée pour une force comprise entre 0 et la force de rupture de 145 daN par câble. L'ensemble des bandelettes (131) de 3 câbles circonférentiels ainsi définis et formant l'armature de frettage (13), leur nombre étant égal au nombre d'intervalles axiaux entre rangées de plots (140), assure la fonction de frettage de la membrane M, frettage d'une part contre les efforts dus à la force centrifuge et d'autre part contre les efforts dus au différentiel de pression p₀ - p₁, p₀ étant la pression de gonflage de la membrane torique M, égale à 9.5.10⁵ Pa, et p₁ étant la pression du pneumatique P égale à 9.0.10⁵ Pa. Ladite fonction de frettage permet à la membrane M de conserver, dans les conditions normales de roulage de l'ensemble, c'est-à-dire dans les conditions de charge, de pression et de vitesse recommandées pour le pneumatique concerné, un rayon R_{M} pratiquement constant et inférieur au ravon R_{E} écrasé du pneumatique P dans des conditions normales de roulage). Lesdites bandelettes (131) permettent un kilométrage plus important en mode dégradé.

Chaque élément annulaire de renforcement (2) est formé par l'enroulement sur lui-même d'un câble de polyamide aromatique composée de 3 fils de 330 Tex, jusqu'à former, dans l'exemple décrit quatre spires d'enroulement. L'élément annulaire (2) se rompt légèrement après la rupture des bandelettes (131) de câbles circonférentiels de frettage, et la désolidarisation de l'élément annulaire de la nappe (120) (l'élément annulaire étant enduit d'un produit anticollant) permet l'accroissement de sa circonférence et ainsi l'expansion complète de la membrane en cas de perte de pression subie par le pneumatique et pour un différentiel de pression p₀ - p'₁ supérieur au différentiel de pression initial de 0,5.10⁵ Pa.

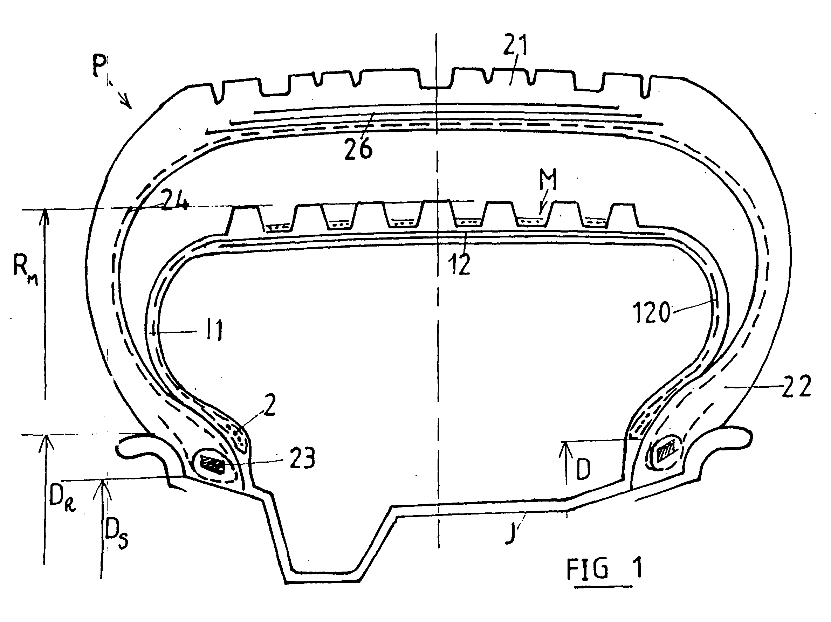

Sur la figure 1, l'ensemble E est composé du pneumatique P, de dimension 495/45-R-22.5 dans l'exemple décrit, de la jante de montage J, et de la membrane torique M conforme à l'invention. Le pneumatique P est un pneumatique universellement connu, avec des flancs réunis radialement à l'extérieur à une bande de roulement (21) et prolongés radialement à l'intérieur à deux bourrelets (22), chaque bourrelet (22) étant renforcé par au moins une tringle (23) autour de laquelle vient s'ancrer une armature de carcasse radiale (24) pour former des retournements (25). Ladite armature de carcasse (24) est surmontée radialement dans le sommet par une armature de sommet (26), composée d'au moins deux nappes de fils ou câbles métalliques parallèles entre eux dans chaque nappe et croisés d'une nappe à la suivante en faisant avec la direction circonférentielle un angle pouvant être compris entre 5° et 45°. Le pneumatique P est dit sans chambre, et comprend intérieurement une couche de mélange de caoutchouc imperméable aux gaz de gonflage.

L'élément annulaire de renforcement (2) de la membrane de soutien M a un diamètre intérieur D compris entre une valeur D_{R}, égale au diamètre du rebord de la jante J. dite 17.00 x 22.5. sur laquelle est monté le pneumatique P et une valeur D_{S} qui est le diamètre nominal de ladite jante J. tel que défini par les nonnes de standardisation en vigueur. La longueur méridienne de la nappe (120) de renforcement d'un flanc de membrane M est telle que le profil méridien à l'état gonflé de ladite nappe ne soit pas en contact avec la paroi mterne du pneumatique hors d'une zone de hauteur radiale comprise entre le diamètre D_{S} et un diamétre D_{S} - 2(D_{R} - D_{S}).

## Revendications

1. Ensemble roulant E pour véhicules, formé par une membrane torique M en caoutchouc renforcé, utilisée comme moyen de soutien de bande de roulement d'un pneumatique P, par ledit pneumatique P et par sa jante de montage J, dont le diamètre nominal est D_{S} et dont le rebord a un diamètre extérieur D_{R}, ledit ensemble roulant E pouvant rouler lorsque le pneumatique P est sujet à une perte de pression, ladite membrane M étant gonflée à une pression p0 supérieure à la pression p1 de la cavité du pneumatique, et ayant, à l'état gonflé, un rayon de sommet R_{M} inférieur au rayon écrasé du pneumatique utilisé à sa pression recommandée, ladite membrane M étant en son sommet (1) renforcée par au moins deux nappes (120) de fils ou câbles parallèles entre eux dans chaque nappe et croisés d'une nappe à la suivante, ledit sommet (1) de ladite membrane M comprenant en outre une armature de frottage (13), composée d'au moins une couche de fils ou câbles, orientés circonférentiellement et présentant une force de rupture par cm de nappe permettant de résister à la tension due à la force centrifuge maximale à laquelle est soumis le pneumatique P, augmentée de la tension due au différentiel de pression p₀ - p₁ existant en roulage normal, mais de rompre pour un différentiel de ression supérieur p₀ - p'₁, et ayant chacun de ses flancs (11) renforcé par au moins une desdites deux nappes (120), vue en section méridienne, la nappe de renforcement de flanc (120) est enroulée dans chaque partie basse de flanc autour d'un élément annulaire de renforcement (2), dont le diamètre intérieur est compris entre une valeur égale à D_{R} et une valeur égale à D_{S} et dont les constitution et dimensionnement transversal permettent sa rupture après celle de l'armature de frettage (13) et pour un différentiel de pression p₀ - p'₁, existant en cas de perte de pression subie par le pneumatique, supérieur au différentiel de pression initial p₀ - p₁, ladite nappe de renforcement (120) n'étant pas solidaire dudit élément annulaire de renforcement (2), et ayant dans chacun des flancs (11) une longueur méridienne, telle que son profil méridien à l'état gonflé permette à la paroi externe de la membrane M de ne pas être en contact avec la paroi interne du pneumatique P hors d'une zone de hauteur radiale comprise entre le diamètre D_{S} et un diamètre D_{S} + 2(D_{R} - D_{S}).

2. Ensemble roulant E selon la revendication 1, **caractérisée en ce que** la force de rupture de l'élément de renforcement (2), autour duquel est enroulée la nappe de renforcement (120) de flanc, est comprise entre 1,2 et 4 fois la force de rupture par cm de l'armature de frettage (13) utilisée dans la membrane M.

3. Ensemble roulant E selon l'une des revendications 1 ou 2, **caractérisée en ce que** la nappe de renforcement (120) de flanc (11) est formée de fils ou câbles radiaux.

4. Ensemble roulant E selon l'une des revendications 1 ou 2, **caractérisée en ce que** la nappe de renforcement (120) de flanc (11) est formée de fils ou câbles faisant avec la direction circonférentielle un angle, pouvant par exemple être compris entre 50° et 90°.

5. Ensemble roulant E selon l'une des revendications 1 ou 2, **caractérisée en ce que** l'armature de sommet (12) et les nappes de renforcement (120) de flanc (11) sont constituées par les mêmes nappes (120) de fils ou câbles obliques faisant avec la direction circonférentielle un angle pouvant être compris entre 50° et 90°; une première nappe (120) dont l'une des extrémités A est située dans la région de l'une des épaules de la membrane M et dont l'autre extrémité B est l'extrémité de son retournement (20) autour de l'élément de renforcement (2) situé du côté opposé à ladite épaule ; une deuxième nappe (120) dont l'une des extrémités A est située dans la région de l'autre épaule de la membrane M et dont l'autre extrémité B est l'autre extrémité de l'autre retournement.

6. Ensemble roulant E selon l'une des revendications 1 à 5, **caractérisée en ce que** l'élément annulaire de renforcement (2) est constitué par l'enroulement d'un filament de polyamide aromatique sur lui même, de façon a former un tronçon de nappe quasi-perpendiculaire à l'axe de rotation de l'ensemble.

7. Ensemble roulant E, particulièrement avec un pneumatique P sans chambre de type Poids-Lourds, selon l'une des revendications 1 à 6, **caractérisé en ce que** la pression intérieure p₀ de ladite membrane M, mesurée à froid, c'est-à-dire à 20° C, est supérieure à la pression p₁ de la cavité interne du pneumatique P d'une quantité comprise entre 0,5.10⁵ Pa et 5,0.10⁵ Pa.

## Patentansprüche

1. Rollende Baugruppe E für Fahrzeuge, die gebildet ist durch eine torusförmige Membran M aus verstärktem Gummi gemäß der Erfindung, die als Unterstützungsmittel für die Lauffläche eines Reifens P verwendet wird, und durch den genannten Reifen P und durch seine Montagefelge J, deren Nenndurchmesser D_{S} ist und deren Randumschlag einen Außendurchmesser von D_{R} aufweist, wobei die genannte rollende Baugruppe E noch fahren kann, wenn der Reifen P Gegenstand eines Druckverlustes ist, wobei die genannte Membran M auf einen Druck p0 aufgepumpt ist, der höher ist als der Druck p1 des Hohlraums des Reifens, und in aufgepumptem Zustand einen Scheitelradius R_{M} hat, der kleiner ist als der eingesunkene Radius des Reifens, der bei seinem empfohlenen Druck verwendet wird, wobei die genannte Membran M in ihrem Scheitel (1) durch mindestens zwei Lagen (120) aus Drähten oder Seilen verstärkt ist, die in jeder Lage zueinander parallel und von einer Lage zur anderen überkreuz verlaufen, wobei der genannte Scheitel (1) der genannten Membran M außerdem eine Versteifungsbewehrung (13) aufweist, die aus mindestens einer Schicht aus Drähten oder Seilen zusammengesetzt ist, die in Umfangsrichtung ausgerichtet sind und eine Bruchkraft pro Zentimeter der Lage aufweisen, die es gestattet, der Zugspannung infolge der maximalen Fliehkraft zu widerstehen, der der Reifen P unterzogen wird, die durch die Zugspannung infolge des Druckunterschieds p₀ - p₁ erhöht wird, der bei normaler Fahrt vorliegt, aber bei einem höheren Druckunterschied p₀ - p'₁ zu brechen, wobei jeder ihrer Flanken (11) durch mindestens eine der genannten, beiden Lagen (120) verstärkt ist, gesehen im Meridianschnitt, wobei die Verstärkungslage der Flanke (120) in jedem unteren Teil der Flanke rund um ein ringförmiges Verstärkungselement (2) herumgewickelt ist, dessen Innendurchmesser zwischen einem Wert von D_{R} und einem Wert von D_{S} liegt und dessen Ausbildung und Bemessung im Querrichtung seinen Bruch nach dem der Versteifungsbewehrung (13) gestatten, und bei einem Druckunterschied von p₀ - p'₁, der im Falle des Druckverlustes vorliegt, den der Reifen erfährt, und der größer ist als der Druckunterschied p₀ - p₁, wobei die genannte Verstärkungslage (120) nicht fest mit dem genannten, ringförmigen Verstärkungselement (2) verbunden ist und in jeder der Flanken (11) eine solche Meridianlänge aufweist, daß es ihr Meridianprofil in aufgepumptem Zustand es der Außenwand der Membran M gestattet, nicht in Berührung mit der Innenwand des Reifens P außerhalb einer Zone mit radialer Höhe zu stehen, die zwischen dem Durchmesser D_{S} und einem Durchmesser D_{S} + 2(D_{R} - D_{S}) liegt.

2. Rollende Baugruppe E nach Anspruch 1, **dadurch gekennzeichnet, daß** die Bruchkraft des Verstärkungselements (2), rund um welches die Verstärkungslage (120) der Flanke(n) herumgeschlagen ist, zwischen dem 1,2- und 4-fachen der Bruchkraft pro Zentimeter der Versteifungsbewehrung (13) liegt, die in der Membran M verwendet ist.

3. Rollende Baugruppe E nach einem der Ansprüche 1 oder 2, **dadurch gekennzeichnet, daß** die Verstärkungslage (120) der Flanke(n) (11) aus radialen Drähten oder Seilen gebildet ist.

4. Rollende Baugruppe E nach einem der Ansprüche 1 oder 2, **dadurch gekennzeichnet, daß** die Verstärkungslage (120) der Flanke(n) (11) aus Drähten oder Seilen gebildet ist, die zur Umfangsrichtung einen Winkel bilden, der zum Beispiel zwischen 50° und 90° liegen kann.

5. Rollende Baugruppe E nach einem der Ansprüche 1 oder 2, **dadurch gekennzeichnet, daß** die Scheitelbewehrung (12) und die Verstärkungslagen (120) der Flanke(n) (11) von denselben Lagen (120) aus schräglaufenden Drähten oder Seilen gebildet sind, die zur Umfangsrichtung einen Winkel bilden, der zwischen 50° und 90° liegt; eine erste Lage (120), von denen eines der Enden A im Bereich einer der Schultern der Membran M gelegen ist, und von denen das andere Ende B das Ende ihres Umschlags (20) um das Verstärkungselement (2) ist, das auf der Seite liegt, die der genannten Schulter entgegengesetzt ist; und eine zweite Lage (120), deren eines Ende A im Bereich der anderen Schulter der Membran M gelegen ist und deren anderes Ende B das andere Ende des anderen Umschlags ist.

6. Rollende Baugruppe E nach einem der Ansprüche 1 bis 5, **dadurch gekennzeichnet, daß** das ringförmige Verstärkungselement (2) durch Aufwickeln eines Filaments aus aromatischem Polyamid auf sich selbst derart gebildet ist, daß ein Lagenstück gewissermaßen senkrecht zur Drehachse der Baugruppe gebilet ist.

7. Rollende Baugruppe E, besonders mit einem Schwerlastreifen P ohne Kammer, nach einem der Ansprüche 1 bis 6, **dadurch gekennzeichnet, daß** der Innendruck p₀ der genannten Membran M, in kaltem Zustand gemessen, das heißt bei 20°C, größer ist als der Druck p₁ des Innenhohlraums des Reifens P, und zwar um ein Maß, das zwischen 0,5.10⁵ und 5,0.10⁵ Pa liegt.

## Claims

1. A rolling assembly E for vehicles, formed by a toric membrane M of reinforced rubber, used as a support means for the tread of a tyre P, by said tyre P and by its mounting rim J, the nominal diameter of which is D_{S} and the flange of which has an outer diameter D_{R}, said rolling assembly E being able to roll when the tyre P is subject to a loss of pressure, said membrane M being inflated to a pressure p0 greater than the pressure p1 of the cavity of the tyre, and having in the inflated state a crown radius R_{M} less than the loaded radius of the tyre when used at its recommended pressure, said membrane being reinforced in its crown (1) by at least two plies (120) of cords or cables which are parallel to each other in each ply and are crossed from one ply to the next, said crown (1) of said membrane M further comprising a hooping reinforcement (13) composed of at least one layer of cords or cables which are oriented circumferentially and have a breaking load per cm of ply which makes it possible to resist the tension due to the maximum centrifugal force to which the tyre P is subject, increased by the tension due to the pressure difference p0 - p1 existing in the case of normal travel, but to break for a greater pressure difference p₀ - p'₁, and having each of its sidewalls (11) reinforced by at least one of said two plies (120), viewed in meridian section, the reinforcement ply of the sidewall (120) is wound in each bottom part of the sidewall around an annular reinforcement element (2), the internal diameter of which lies between a value equal to D_{R} and a value equal to D_{S} and the constitution and transverse dimensions of which permit the breaking thereof after that of the hooping reinforcement (13), and for a pressure difference p₀ - p'₁ existing in the case of the tyre undergoing a loss of pressure, greater than the initial pressure difference p₀ - p₁, said reinforcement ply (120) not being integral with said annular reinforcement element (2), and having within each of the sidewalls (11) a meridian length such that its meridian profile in the inflated state permits the outer wall of the membrane M not to be in contact with the inner wall of the tyre P outside a zone of radial height of between the diameter D_{S} and a diameter D_{S} + 2(D_{R} - D_{S}).

2. A rolling assembly E according to Claim 1, **characterised in that** the breaking load of the reinforcement element (2) around which the sidewall reinforcement ply (120) is wound is between 1.2 and 4 times the breaking load per cm of the hooping reinforcement (13) used in the membrane M.

3. A rolling assembly E according to one of Claims 1 or 2, **characterised in that** the reinforcement ply (120) of the sidewall (11) is formed of radial cords or cables.

4. A rolling assembly E according to one of Claims 1 or 2, **characterised in that** the reinforcement ply (120) of the sidewall (11) is formed of cords or cables which form with the circumferential direction an angle which may for example be between 50° and 90°.

5. A rolling assembly E according to one of Claims 1 or 2, **characterised in that** the crown reinforcement (12) and the reinforcement plies (120) of the sidewall (11) are formed by the same plies (120) of oblique cords or cables which form with the circumferential direction an angle which may be between 50° and 90°; a first ply (120), one of the ends A of which is located in the region of one of the shoulders of the membrane M, and the other end B of which is the end of its upturn (20) around the reinforcement element (2) located on the side opposite said shoulder; a second ply (120), one of the ends A of which is located in the region of the other shoulder of the membrane M, and the other end B of which is the other end of the other upturn.

6. A rolling assembly E according to one of Claims 1 to 5, **characterised in that** the annular reinforcement element (2) is formed by the winding of a filament of aromatic polyamide on itself so as to form a section of ply which is virtually perpendicular to the axis of rotation of the assembly.

7. A rolling assembly E, particularly with a tubeless tyre P of the heavy-vehicle type, according to one of Claims 1 to 6, **characterised in that** the internal pressure p₀ of said membrane M, when measured cold, that is to say at 20°C, is greater than the pressure p₁ of the inner cavity of the tyre P by an amount of between 0.5 x 10⁵ Pa and 5.0 x 10⁵ Pa.
